# FASCICULE DE BREVET EUROPEEN

(11) **EP 3 277 959 B1**
(45) Date de publication et mention de la délivrance du brevet: **15.01.2020**
(21) Numéro de dépôt: 16741356.6
(22) Date de dépôt: 22.06.2016
(51) Int. Cl.: F04B 43/08, F04B 43/12

(54) **POMPE PERISTALTIQUE AVEC FIXATION DE TUYAU AMELIOREE**
PERISTALTISCHE PUMPE MIT VERBESSERTER ROHRBEFESTIGUNG
PERISTALTIC PUMP WITH IMPROVED PIPE ATTACHMENT

(30) Priorité: 23.06.2015 FR 1555775
(43) Date de publication de la demande: 07.02.2018
(73) Titulaire: Mouvex, 89000 Auxerre (FR)
(72) Inventeur: BARIAU, Fabrice, 62000 Arras (FR); GIRARD, Michel, 26740 Montboucher Sur Jabron (FR)
(74) Mandataire: Novagraaf Technologies
(86) Numéro de dépôt international: PCT/FR2016/051531
(87) Numéro de publication internationale: WO 2016/207550

(56) Documents cités:
- EP-A1- 0 569 875
- EP-A2- 2 447 532
- GB-A- 2 521 226

## Description

L'invention concerne le domaine pompes servant à pomper un liquide ou un gaz. Plus particulièrement, l'invention concerne une pompe péristaltique ayant une étanchéité et une fixation améliorées du tuyau flexible servant au transport de fluides.

Les pompes péristaltiques ont des applications dans divers domaines. Elles présentent l'avantage de permettre le pompage de fluides sans risque de contamination. En effet, lors du déplacement d'un fluide liquide ou gazeux, celui-ci reste à l'intérieur du tuyau et ne rentre en contact avec aucun autre élément de la pompe.

Une pompe péristaltique comporte un corps de pompe qui contient un tuyau flexible et un élément rotatif avec des rouleaux, galets ou patins qui appliquent des pressions et déforment le tuyau flexible pendant la rotation de l'élément rotatif pour entraîner le déplacement du fluide. Le corps de pompe comporte également un lubrifiant servant au refroidissement du tuyau.

Le tuyau flexible étant très sollicité lors d'un fonctionnement de la pompe, la fixation de celui-ci au corps de pompe doit être particulièrement solide et étanche.

Les pompes péristaltiques connues peuvent être équipées d'un dispositif de fixation du tuyau composé d'un insert partant d'une bride et inséré contre la paroi intérieure du tuyau et d'un collier qui serre le tuyau pour le comprimer contre l'insert. Ce collier assure également l'étanchéité entre le tuyau et l'insert. En outre, pour assurer l'étanchéité entre le tuyau et le corps de pompe, une manchette en élastomère est disposée entre de la paroi extérieure du tuyau et le corps de pompe. Cette manchette est fixée par un premier collier au corps de pompe et par un deuxième collier au tuyau.

L'étanchéité des pompes péristaltiques connues n'est pas satisfaisante. En effet, des fuites subsistent entre le tuyau et le corps de pompe et également entre le tuyau et l'insert. De plus, un nombre important de pièces, notamment des colliers, sont mises en œuvre, ce qui cause des coûts non négligeables à la fabrication.

Les pompes péristaltiques connues peuvent également être équipées d'un insert conique ou à olives inséré contre la paroi intérieure du tuyau et venant comprimer ce dernier contre le corps de pompe. Cet insert est fixé sur le corps de pompe par une bride.

L'étanchéité de ce system n'est également pas satisfaisante, car la compression du tuyau n'est pas ajustable et donc est très sensible aux variations dimensionnelles du tuyau.

Le document GB2521226 A décrit une pompe péristaltique selon le préambule de la revendication 1.

L'objectif de l'invention est de proposer une pompe péristaltique ayant une étanchéité renforcée entre le tuyau et le corps de pompe et entre le tuyau et l'insert. Un autre objectif de l'invention est d'améliorer la fixation du tuyau au corps de pompe tout en gardant une certaine tolérance sur la variation de la longueur du tuyau. L'invention a également pour objectif de simplifier la fixation du tuyau au corps de pompe.

Ces objectifs sont atteints à l'aide d'une pompe péristaltique selon la revendication 1.

La pompe péristaltique selon l'invention comporte donc en entrée et en sortie un système de fixation amélioré qui comporte en plus de l'insert utilisé de manière connue sur ce type de pompes, un anneau élastique déformable inséré dans une gorge du corps de pompe et comprimé par le poussoir. De cette manière, l'anneau élastique appuie avec une certaine force sur la paroi extérieure du tuyau pour le comprimer contre l'insert et augmenter ainsi l'étanchéité entre le tuyau et l'insert.

La matière composant de l'anneau élastique assure également l'étanchéité entre le tuyau et le corps de pompe en bouchant les vides entre la paroi extérieure du tuyau et la paroi intérieure du corps de pompe. En outre, la compression exercée sur le tuyau renforce encore la fixation de celui-ci au corps de pompe.

En outre, grâce à l'utilisation du système de fixation selon l'invention, il n'est plus nécessaire d'utiliser une manchette en élastomère entre la paroi extérieure du tuyau et le corps de pompe, ni de collier pour assurer sa fixation au corps de pompe et au tuyau. De ce fait, la fixation du tuyau au corps de pompe est également simplifiée. Cette simplification permet ainsi de réaliser des économies non négligeables du fait de la suppression de la manchette et de la réduction du nombre de colliers nécessaires.
Par ailleurs, le poussoir étant fixé directement au corps de pompe, on peut agir sur le poussoir indépendamment de la bride et agir sur la bride indépendamment du poussoir.

Selon un mode de réalisation, le dispositif de fixation comporte au moins deux anneaux élastiques et au moins un anneau rigide, insérés dans ladite gorge circulaire et agencés de sorte que chaque anneau élastique est de l'autre séparé par un anneau rigide. Le fait d'alterner des anneaux élastiques avec des anneaux rigides, par exemple en acier, permet d'exercer des pressions plus fortes sur le tuyau. De cette manière, on peut améliorer encore plus l'étanchéité de la pompe.

Avantageusement, l'anneau élastique est un élastomère. L'élastomère est un matériau qui présente l'avantage de supporter de très grandes déformations et de reprendre sa forme initiale à la fin d'une sollicitation.

Selon une réalisation de l'invention, le poussoir est maintenu au corps de pompe par au moins une vis et que ladite vis permet de régler la pression exercée par le poussoir sur l'anneau élastique. De cette manière, la pression exercée par le poussoir sur l'anneau élastique est réglable. Elle peut ainsi être ajustée par exemple selon les caractéristiques du matériau de l'anneau élastique et/ou celles du tuyau.

Selon une autre réalisation de l'invention, la bride comporte un évidement permettant le passage de la vis fixant le poussoir. Grace à cet évidement, l'accès à la vis permettant le réglage de la pression exercée sur l'anneau élastique, est facilité.

L'invention sera mieux comprise et d'autres caractéristiques et/ou avantages apparaitront à la lecture de la description suivante, d'un mode de réalisation préféré, donné à titre d'exemple non limitatif, en relation avec les dessins annexés, parmi lesquels :
- la figure 1 est une vue d'une pompe péristaltique selon l'invention ;
- la figure 2 est une vue en coupe longitudinale de l'entrée ou sortie de la pompe, équipée d'un système de fixation selon l'invention.

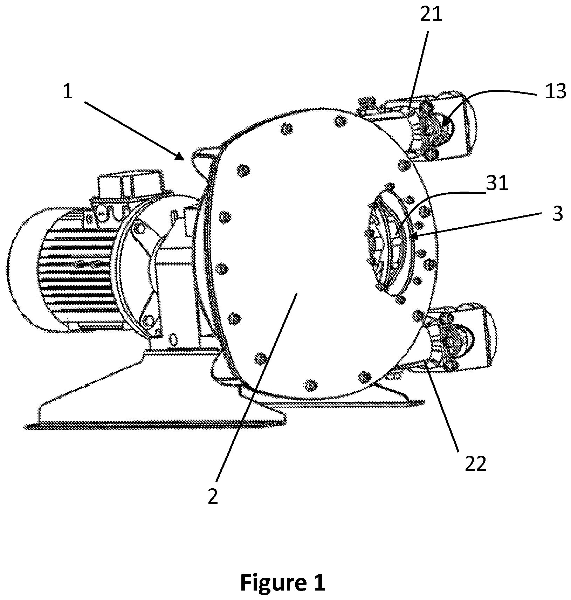

Une pompe péristaltique 1 selon l'invention est représentée par la figure 1. Cette pompe comprend un corps de pompe 2, qui comporte une entrée 21 et une sotie 22 ou l'inverse selon le sens de rotation de la pompe. Ce corps de pompe 1 contient en son intérieur un tuyau 4 flexible d'un type connu, dont une première extrémité est disposé à l'entrée 21 et une deuxième extrémité est disposée à la sortie 22. Le tuyau 4 comprend également une paroi intérieure 41 et une paroi extérieure 42. De manière connue, la pompe 1 contient aussi à l'intérieur du corps de pompe 1, un élément rotatif d'un type connu, par exemple une roue ayant des patins 31, visible par l'ouverture 3. Cet élément rotatif applique pendant sa rotation des pressions sur le tuyau 4 flexible pour entraîner le déplacement d'un fluide entre l'entrée 21 et la sortie 22.

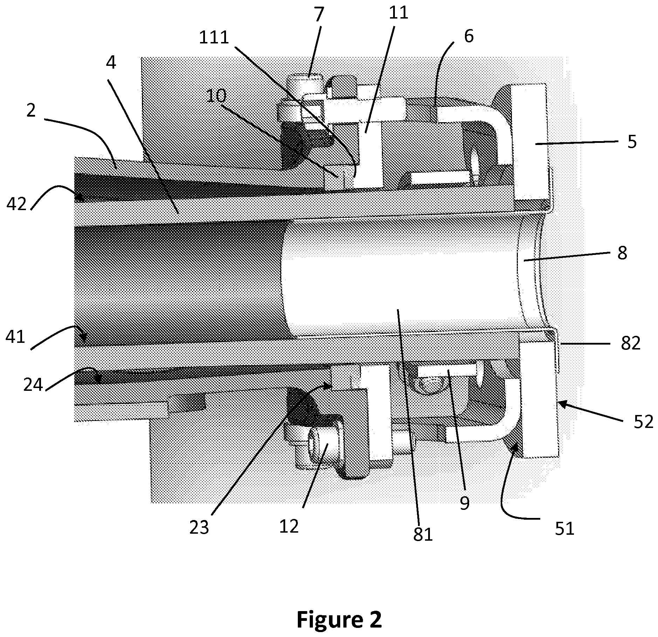

Pour assurer l'étanchéité de la pompe 1, le tuyau 4 est fixé au niveau de l'entrée 21 et de la sortie 22 par un dispositif de fixation dont un exemple est représenté par la figure 2.

Dans cet exemple, le dispositif de fixation comprend une bride 5, ayant une paroi intérieure 51 et une paroi extérieure 52. Cette bride est maintenue au corps de pompe 2 par au moins un étrier 6. Cet étrier est par exemple fixé par des vis 7 au corps de pompe 2.

Le dispositif de fixation comporte également un insert 8 comprenant une partie tubulaire 81 et un épaulement 82 à l'une des extrémités de la partie tubulaire 81. L'épaulement 82 comprend une paroi intérieure 821.

Pour fixer le tube 4 à la bride 5, la partie tubulaire 81 est insérée contre la paroi intérieure 41 du tuyau 4 et la paroi intérieure 821 de l'épaulement 82 de l'insert 8 est appuyée contre la paroi extérieure 52 de la bride 5.

Optionnellement, pour améliorer la fixation du tuyau 4 au corps de pompe 2, le système de fixation peut comporter un ou plusieurs colliers 9.

Au niveau de l'entrée 21 et de la sortie 22, le corps de pompe comporte une gorge circulaire intérieure 23 dans laquelle est inséré un anneau élastique déformable 10, par exemple en élastomère. L'anneau 10 est comprimé par un poussoir 11. Ce poussoir 11 a la forme d'un anneau et comprend un bossage 111 complémentaire à la forme de la gorge 23. Le poussoir 11 est fixé à l'entrée 21 ou sortie 22, du corps de pompe 2 à l'aide d'au moins une vis 12. Cette vis 12 sert aussi à régler la pression exercée par le poussoir 11 sur l'anneau élastique 10, de sorte que l'anneau élastique 10 appuie avec une certaine force sur la paroi extérieure 42 du tuyau 4 pour le comprimer contre l'insert 8 et augmenter ainsi l'étanchéité entre le tuyau 4 et l'insert 8.
Enfin, dans cet exemple de réalisation, le poussoir 11 est fixé par la vis 12 directement au corps de pompe et indépendamment de l'étrier 6 et de la bride 5.
L'avantage de cet agencement est que le réglage de la pression exercée par le poussoir 11 sur l'anneau élastique 10 se fait indépendamment des autres éléments composant le système de fixation.

Ainsi, on peut serrer le poussoir 11 pour augmenter la pression exercée sur l'anneau élastique 10 sans être limité par la longueur du tuyau 4. Cela permet d'avoir une tolérance sur la longueur du tuyau qui peut varier d'un tuyau à l'autre lors de la fabrication ou simplement par effet de variation de la température.
En effet, si la bride 5 est serrée en même temps que le poussoir 11 par une même vis, la pression exercée sur l'anneau élastique 10 peut être limitée par la longueur du tuyau, ce qui empêcherait toute tolérance quant à la longueur du tuyau.
Par ailleurs, cet agencement permet aussi d'éviter de transmettre des vibrations de la bride 5 vers le poussoir 11 qui peuvent influer sur la stabilité du serrage par la vis 12.

La matière de l'anneau élastique 10 assure également l'étanchéité entre le tuyau 4 et le corps de pompe 2 en bouchant les vides entre la paroi extérieure 42 du tuyau 4 et la paroi intérieure 24 du corps de pompe 2.

Afin de pouvoir accéder aisément à la vis 12 pour serrer ou desserrer le poussoir 11, un évidement 13 est prévu dans la bride 6.

Selon une réalisation de l'invention, le dispositif de fixation comporte au moins deux anneaux élastiques 10 et au moins un anneau rigide, insérés dans la gorge circulaire 23 et agencés de sorte que chaque anneau élastique 10 est séparé de l'autre par un anneau rigide. Ainsi, il est possible d'augmenter la pression exercée sur le tuyau 4.

## Revendications

1. Pompe péristaltique (1) comprenant un corps de pompe (2) comportant une entrée (21) et une sortie (22) et un tuyau (4) flexible courbé disposé entre ladite entrée (21) et ladite sortie (22), ledit tuyau (4) flexible comprenant une paroi intérieure (41) et une paroi extérieure (42), et une première et une deuxième extrémité fixées chacune par un dispositif de fixation au corps de pompe (2), le dispositif de fixation comprend :
- une bride (5), ayant une paroi intérieure (51) et une paroi extérieure (52), maintenue au corps de pompe (2) par au moins un étrier (6),
- un insert (8), inséré contre la paroi intérieure (41) du tuyau (4) et comprenant un épaulement (82) ayant une paroi intérieure et une paroi extérieure, la paroi intérieure de l'épaulement (82) étant appuyée contre la paroi extérieure (52) de la bride (5),
le corps de pompe (2) comportant une gorge circulaire (23) intérieure en entrée (21) et en sortie (22), le dispositif de fixation comportant un anneau élastique (10) déformable inséré dans ladite gorge circulaire (23), et un poussoir (11) fixé au corps de pompe (2) et ayant la forme d'un anneau comprenant un bossage (111) complémentaire à la forme de la gorge (23), l'anneau élastique (10) étant comprimé par le poussoir (11) **caractérisée en ce que** le poussoir (11) est fixé directement au corps de pompe (2) de sorte qu'on peut agir sur le poussoir (11) indépendamment de la bride (5) et agir sur la bride (5) indépendamment du poussoir.

2. Pompe péristaltique (1) selon la revendication 1, **caractérisée en ce que** le dispositif de fixation comporte au moins deux anneaux élastiques (10) et au moins un anneau rigide, insérés dans ladite gorge circulaire (23) et agencés de sorte que chaque anneau élastique (10) est séparé de l'autre par un anneau rigide.

3. Pompe péristaltique (1) selon l'une des revendications 1 ou 2, **caractérisée en ce que** l'anneau élastique (10) est un élastomère.

4. Pompe péristaltique (1) selon l'une des revendications 1 à 3, **caractérisée en ce que** le poussoir (11) est maintenu au corps de pompe (2) par au moins une vis (12) et **en ce que** ladite vis (12) permet de régler la pression exercée par le poussoir (11) sur l'anneau élastique (10).

5. Pompe péristaltique (1) selon l'une des revendications précédentes, **caractérisée en ce que** la bride (5) comporte un évidement (13) permettant le passage de la vis (12) fixant le poussoir (11).

## Patentansprüche

1. Peristaltische Pumpe (1), umfassend einen Pumpenkörper (2), der einen Eingang (21) und einen Ausgang (22) und einen gekrümmten biegsamen Schlauch (4) beinhaltet, der zwischen dem Eingang (21) und dem Ausgang (22) angeordnet ist, wobei der biegsame Schlauch (4) eine Innenwand (41) und eine Außenwand (42) umfasst, und ein erstes und ein zweites Ende, die jeweils durch eine Befestigungsvorrichtung am Pumpenkörper (2) befestigt sind, wobei die Befestigungsvorrichtung umfasst:
- einen Flansch (5), der eine Innenwand (51) und eine Außenwand (52) aufweist, der durch mindestens einen Bügel (6) am Pumpenkörper (2) festgehalten wird,
- einen Einsatz (8), der an der Innenwand (41) des Schlauches (4) eingesetzt ist, und einen Absatz (82) umfasst, der eine Innenwand und eine Außenwand aufweist, wobei die Innenwand des Absatzes (82) an der Außenwand (52) des Flansches (5) anliegt,
wobei der Pumpenkörper (2) eine innere kreisförmige Nut (23) am Eingang (21) und am Ausgang (22) beinhaltet, wobei die Befestigungsvorrichtung einen verformbaren elastischen Ring (10) beinhaltet, der in die kreisförmige Nut (23) eingesetzt ist, und einen Stößel (11) der am Pumpenkörper (2) befestigt ist, und die Form eines Ringes, einen zu der Form der Nut (23) ergänzenden Buckel (111) umfassend, aufweist, wobei der elastische Ring (10) durch den Stößel (11) komprimiert wird, **dadurch gekennzeichnet, dass** der Stößel (11) direkt an dem Pumpenkörper (2) befestigt ist, sodass man auf den Stößel (11) unabhängig von dem Flansch (5) einwirken kann und auf den Flansch (5) unabhängig von dem Stößel einwirken kann.

2. Peristaltische Pumpe (1) nach Anspruch 1, **dadurch gekennzeichnet, dass** die Befestigungsvorrichtung mindestens zwei elastische Ringe (10) und mindestens einen starren Ring beinhaltet, die in die kreisförmige Nut (23) eingesetzt sind, und angeordnet sind, sodass jeder elastische Ring (10) durch einen starren Ring von dem anderen getrennt ist.

3. Peristaltische Pumpe (1) nach einem der Ansprüche 1 oder 2, **dadurch gekennzeichnet, dass** der elastische Ring (10) ein Elastomer ist.

4. Peristaltische Pumpe (1) nach einem der Ansprüche 1 bis 3, **dadurch gekennzeichnet, dass** der Stößel (11) durch mindestens eine Schraube (12) an dem Pumpenkörper (2) festgehalten ist, und dadurch, dass die Schraube (12) ermöglicht, den durch den Stößel (11) auf den elastischen Ring (10) ausgeübten Druck zu regeln.

5. Peristaltische Pumpe (1) nach einem der vorstehenden Ansprüche, **dadurch gekennzeichnet, dass** der Flansch (5) eine Ausnehmung (13) beinhaltet, die den Durchgang der Schraube (12), die den Stößel (11) befestigt, erlaubt.

## Claims

1. A peristaltic pump (1) comprising a pump body (2) with an inlet (21), an outlet (22) and a flexible curved pipe (4) arranged between said inlet (21) and said outlet (22), said flexible pipe (4) comprising an inner wall (41) and an outer wall (42), and a first and a second end each fixed to the pump body (2) by a fixing device, the fixing device comprising:
- a flange (5) with an inner wall (51) and an outer wall (52), held on the pump body (2) by at least one bracket (6),
- an insert (8) inserted against the inner wall (41) of the pipe (4) and comprising a shoulder (82) with an inner wall and an outer wall, the inner wall of the shoulder (82) resting against the outer wall (52) of the flange (5),
the pump body (2) comprising an inner circular groove (23) at the inlet (21) and at the outlet (22), the fixing device comprising a deformable elastic ring (10) inserted into said circular groove (23), and a pusher (11) fixed to the pump body (2) and having the shape of a ring comprising a protrusion (111) complementary to the shape of the groove (23), the elastic ring (10) being compressed by the pusher (11), wherein the pusher (11) is fixed directly to the pump body (2) such that it is possible to act on the pusher (11) independently of the flange (5) and to act on the flange (5) independently of the pusher.

2. The peristaltic pump (1) as claimed in claim 1, wherein the fixing device comprises at least two elastic rings (10) and at least one rigid ring, which are inserted in said circular groove (23) and arranged such that each elastic ring (10) is separated from the other by a rigid ring.

3. The peristaltic pump (1) as claimed in one of claims 1 or 2, wherein the elastic ring (10) is an elastomer.

4. The peristaltic pump (1) as claimed in any of claims 1 to 3, wherein the pusher (11) is held on the pump body (2) by at least one screw (12), and in that said screw (12) allows adjustment of the pressure exerted by the pusher (11) on the elastic ring (10).

5. The peristaltic pump (1) as claimed in any of the preceding claims, wherein the flange (5) comprises a recess (13) allowing passage of the screw (12) fixing the pusher (11).
